(19)

Europäisches Patentamt
European Patent Office
Office européen des brevets

(11) **EP 1 993 182 A2**

(12) **EUROPEAN PATENT APPLICATION**

(43) Date of publication:
**19.11.2008 Bulletin 2008/47**

(51) Int Cl.:
**H02H 3/087** (2006.01)　　　**H02H 6/00** (2006.01)

(21) Application number: **08008578.0**

(22) Date of filing: **07.05.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **18.05.2007　JP 2007132767**

(71) Applicant: **YAZAKI CORPORATION Tokyo (JP)**

(72) Inventor: **Nakamura, Yoshihide Susono-shi Shizuoka-ken (JP)**

(74) Representative: **HOFFMANN EITLE Patent- und Rechtsanwälte Arabellastrasse 4 81925 München (DE)**

(54) **Protection device for load circuits**

(57)　　When a current flowing into a load 4 is increasing, a temperature of a wire is estimated by different estimation depending on whether the current is a normal current or the over-current. When the current flowing into the load 4 is decreasing, the temperature of the wire is estimated by different estimation depending on whether the current is the normal current or the over-current. Accordingly, a load circuit is protected by the precise estimation of an increasing temperature of the wire, which is made by determining whether the present condition of the load is in a normal mode or in an overcurrent-mode where a chattering short-circuit or a layer short-circuit occurs.

**FIG. 2**

EP 1 993 182 A2

**Description**

BACKGROUND OF THE INVENTION

1. Field of the Invention

The present invention is directed to a protection circuit for protecting a load circuit by detecting a temperature of a conductive wire in the load circuit, when the temperature increases.

2. Description of the Related Art

A conventional load circuit supplying a power to a load such as a bulb, a motor or the like, has a battery and an electronic switch (semiconductor switch, etc.) provided between the battery and the load. These components are connected by conductive wires. The load circuit further has a control device to turn on/off the electronic switch. Specifically, the control device outputs drive or stop signals to the electronic switch so that the load is driven or stopped.

In the load circuit as described above, an overcurrent protection function is provided by a fuse or the like to turn off the load circuit immediately. Specifically, this function turns off the electronic switch and the load circuit by detecting a current in the load, which exceeds a predetermined threshold value.

According to the load circuit described above, if the current is an over-current comparable to the predetermined threshold value, that is, if a so-called dead short circuit has occurred in the load circuit, the overcurrent protection function detects the over-current and protects the load circuit. However, if the current is between a normal value and the predetermined threshold value, more specifically if a so-called layer short circuit has occurred or a so-called chattering short circuit, which repeats periodical short circuits, has occurred, the overcurrent protection function occasionally cannot detect the over-current.

When the layer short circuit or the chattering short circuit occurs, a temperature of the conductive wire would increase due to Joule heat generated therein. If a heating rate of the wire exceeds a cooling rate thereof, problems such as smoke emission from the wire or burnout of the wire may occur.

Japanese Patent Laid-Open Publication 2002-084654 discloses a protection apparatus to solve the above problem. This apparatus calculates Joule heat based on a measured current flowing in a load. Further, it calculates an amount of heat radiation from the load when the current does not flow. Furthermore, it calculates an amount of heat which is generated by an arcing just after a power supply has been turned off. Accordingly, if the total amount of the above heat is calculated and it exceeds a predetermined value, the apparatus shuts off the load circuit and protects whole circuits.

SUMMARY OF THE INVENTION

However, the protection apparatus for the load circuit, which is described above, accumulates amounts of generated heat and radiated heat, and determines whether or not the load circuit is shut off depending on the accumulated amounts. Therefore, the apparatus does not take account of an effective increase rate of the temperature of the wire. Specifically, if a thick wire was used and the generated heat therefrom was large, the temperature of the wire would not increase very much because the heat radiated from the wire sufficiently exceeds the heat generated therein. Consequently, there is a problem in that the circuit is forcibly shut off irrespective of the fact that the power can still be applied to the load device.

On the contrary, if a thin wire was used and the amount of generated heat was small, the temperature of the wire would unexpectedly increase, but the circuit would not be shut off irrespective of a substantial smoke emission from the wire or burnout thereof. Further, the overcurrent protection function works only when the current exceeds the predetermined threshold value. Therefore, a repetitive operation, which turns on/off by the detected current around the predetermined threshold value, increases an error of the current to be detected, thus degenerates a reliability of the function.

In light of the above-described problems, an objective of the present invention is to provide a protection device for a load circuit, which is capable of determining shutdown of the load circuit depending on a temperature of the wire connecting to a load when the layer short circuit or the chattering short circuit occurs.

The present invention is a protection device protecting a load circuit in which a power supply, a switch and a load are connected by a conductive wire, base on a detected current flowing into the load, comprising: a current detecting device detecting a current flowing into the load; a normal-mode increasing temperature estimation device estimating an increasing temperature of the wire by a first estimation based on the current detected by the current detecting device and thermal properties of the wire, when the current detecting device detects the current, the detected current is lower than a predetermined threshold value, and the current is increasing; an overcurrent-mode increasing temperature estimation device estimating the increasing temperature of the wire by a second estimation based on the current detected by the current detecting device and thermal properties of a conductor connecting the power supply to the load, when the current detecting device detects the current, the detected current is equal to the predetermined threshold value or higher, and the current is increasing; a normal-mode decreasing temperature estimation device estimating a decreasing temperature of the wire by a third estimation based on the current detected by the current detecting device and thermal properties of the wire, when the current detecting device detects no current, or when the current detecting device detects the current, the detected current is lower than the predetermined threshold value, and the current is decreasing; an overcurrent-mode decreasing temperature estimation device estimating the decreasing temperature of the wire by a fourth estimation based on the current detected by the current detecting device and the thermal properties of the conductor connecting the power supply to the load, when the current detecting device detects the current, the detected current is equal to the predetermined threshold value or higher, and the current is decreasing; an arc-induced increasing temperature estimation device estimating the increasing temperature of the wire due to an arcing with a preset arc-induced map, the arcing just after the current detecting device detects the current and thereafter the current is shut off or starts to decrease; a present temperature estimation device estimating the temperature of the wire by accumulating the increasing and decreasing temperatures estimated by the normal-mode increasing temperature estimation device, overcurrent-mode increasing temperature estimation device, normal-mode decreasing temperature estimation device, overcurrent-mode decreasing temperature estimation device, and arc-induced increasing temperature estimation device; a temperature determination device determining whether or not the temperature of the wire estimated by the present temperature estimation device exceeds a predetermined threshold temperature; a control device shutting off the load circuit when the temperature determination device determines the temperature of the wire exceeds the predetermined threshold temperature.

According to the present invention, when the current detection device detects the current which is lower than the predetermined threshold value and the current is increasing or is stable, the increasing temperature of the wire is estimated based on the detected current and the thermal properties of the wire. Alternatively, when the current detection device detects the current which is equal to the predetermined threshold value or higher and the current is increasing or stable, the increasing temperature of the wire is estimated based on the detected current and the thermal properties of the conductor (the wire and the pathway of the short-circuit).

Further, when the current detection device detects no current, or the detected current is lower than the predetermined threshold value and is decreasing, the decreasing temperature is estimated base on the thermal properties of the wire. Alternatively, when the current detection device detects the current which is equal to the predetermined threshold value or higher, and the current is decreasing, the decreasing temperature of the wire is estimated based on the thermal properties of the conductor (the wire and the pathway of the short-circuit).

Furthermore, the increasing temperature due to the arcing is estimated. Here, the arcing occurs just after the current is shut off or the current turns to decrease from the increase thereof.

Moreover, the present temperature of the wire is estimated by inclusively accumulating the increasing and decreasing temperatures as described above. If the estimated present temperature exceeds the predetermined threshold temperature, the load circuit is shut off. Accordingly, it is determined whether or not the circuit is shut off, based on the temperature of the wire. Thus, the shutoff operation can be performed accurately depending on the temperature of the wire.

BRIEF DESCRIPTION OF THE DRAWINGS

FIG. 1 is a circuit diagram showing a load circuit including a protection device according to an embodiment of the present invention
FIG. 2 is a functional block diagram showing a control circuit shown in FIG. 1
FIG. 3 is a flowchart showing processes performed in the protection device.
FIG. 4A is a chart indicating variation of a temperature of a wire with transit time when a current into the wire is increasing; and FIG. 4B is a chart indicating variation of the same when the current is decreasing or becomes zero after the temperature is saturated.
FIG. 5A is a chart indicating variation of a temperature of a wire with transit time when a current into the wire is increasing; and FIG. 5B is a chart indicating variation of the same when the current decreases before the temperature is saturated.
FIG. 6 is an example of an arc-related map stored in an arc-induced increasing temperature estimation device.

DETAILED DESCRIPTION OF THE EMBODIMENT

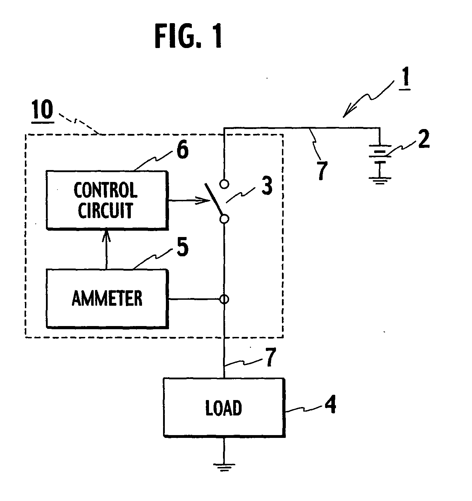

An embodiment of the present invention will be explained hereinafter with reference to the drawings. FIG. 1 is a circuit diagram of a load circuit including a protection circuit according to the embodiment of the present invention. The load circuit may be a circuit supplying a power from a battery in the vehicle to a load such as a bulb, a motor or the like.

As shown in the FIG. 1, a load circuit 1 has a battery 2 provided in a vehicle; a load 4 such as a bulb, a motor or the like; and an electronic switch (switch) 3 such as a MOSFET to supply or shut off the power from the battery 2 to the load 4. Here, the electronic switch 3 is provided between the battery 2 and the load 4.

The load circuit 1 further has an ammeter (a current detection device) 5 detecting (measuring) a current flowing into the load 4; and a control circuit 6 for controlling ON and OFF states of the electronic switch 3. Here, the battery 2 electrically connects to the electronic switch 3 by a wire 7. In the same way, the electronic switch 3 electrically connects to the load 4 by the wire 7. Accordingly, in this embodiment, a protection circuit 10 for the load circuit includes the electronic switch 3, the ammeter 5 and the control circuit 6.

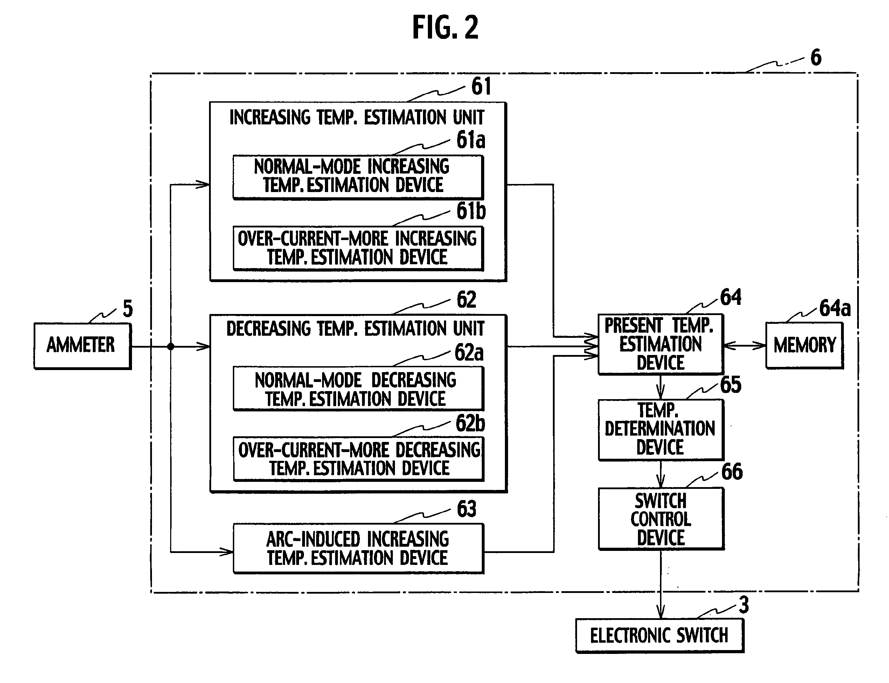

FIG. 2 is a functional block diagram showing a detailed configuration of the control circuit 6. As shown in FIG. 2, the control circuit 6 has an increasing temperature estimation unit 61, a decreasing temperature estimation unit 62, an arc-induced increasing temperature estimation device 63, a present temperature estimation device 64, a temperature determination device 65, a switch control device (a shutoff control device) 66, and a memory 64a.

The increasing temperature estimation unit 61 includes a normal-mode increasing temperature estimation device 61a and an overcurrent-mode increasing temperature estimation device 61b. The normal-mode increasing temperature estimation device 61a estimates an increasing temperature of the wire 7 when the current detected (measured) by the ammeter 5 is lower than a predetermined threshold value (e.g. 10A). The overcurrent-mode increasing temperature estimation device 61b estimates a increasing temperature of the wire 7 when the current detected (measured) by the ammeter 5 is the predetermined threshold value or higher. It should be noted that the predetermined value is not limited to 10A.

The normal-mode increasing temperature estimation device 61a estimates the increasing temperature of the wire 7 at a predetermined sampling rate (e.g. 5msec) based on the current detected by the ammeter 5 and preset thermal properties of the wire 7, when the current is increasing while the electronic switch 3 is turned on and the current is lower than the predetermined threshold value. The preset thermal properties are a thermal resistance R1 and a thermal capacity C1, as described below.

The overcurrent-mode increasing temperature estimation device 61b estimates the increasing temperature of the wire 7 at the predetermined sampling rate based on two factors, when an over-current flows. The first factor is the over-current flowing into the load 4, which is resulted from a short circuit and is increasing while the electronic switch 3 is turned on. The second factor is total thermal properties which includes the preset thermal properties of the wire 7 and thermal properties of a contact conductor by which the short circuit is caused. The total thermal properties are a thermal resistance R2 and a thermal capacity C2, as described below.

The decreasing temperature estimation unit 62 has a normal-mode decreasing temperature estimation device 62a and an overcurrent-more temperature estimation device 62b. The normal-mode decreasing temperature estimation device 62a estimates a decreasing temperature of the wire 7 when the current detected by the ammeter 5 is lower than the predetermined threshold value. The overcurrent-more temperature estimation device 62b estimates a decreasing temperature of the wire 7 when the current detected by the ammeter 5 is the predetermined threshold value or higher.

The normal-mode decreasing temperature estimation device 62a estimates the decreasing temperature of the wire 7 at the predetermined sampling rate, based on the current detected by the ammeter 5 and the preset thermal properties of the wire 7, when the electronic switch 3 is turned off, or when the electronic switch is turned on and the current detected by the ammeter 5 is lower than the predetermined threshold value.

The overcurrent-more decreasing temperature estimation device 62b estimates the decreasing temperature of the wire 7 at the predetermined sampling rate, based on two factors, when an over-current flows. The first factor is the over-current flowing into the load 4, which is resulted from a short circuit and is decreasing while the electronic switch 3 is turned on. The second factor is total thermal properties which include the preset thermal properties of the wire 7 and thermal properties of a contact conductor by which the short circuit is caused. The total thermal properties are a thermal resistance R2 and a thermal capacity C2, as described below.

The arc-induced increasing temperature estimation device 63 estimates an increasing temperature of the wire 7 at the predetermined sampling rate, based on two factors. The first factor is the current detected by the ammeter 5 just after the electronic switch is turned off, or the current detected by the ammeter 5 just after the current turns to decrease from the increase thereof while the over-current is flowing. The second factor is the preset thermal properties of the wire 7.

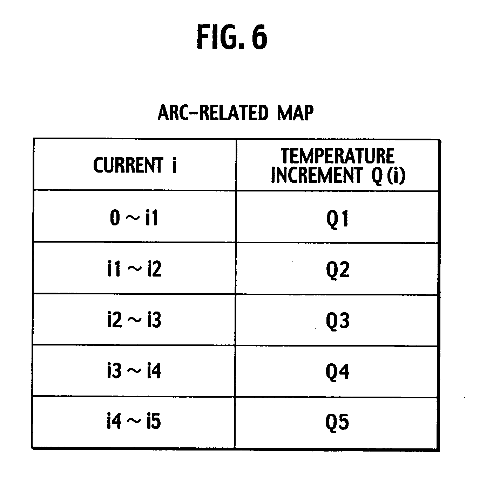

Specifically, the arc-induced increasing temperature estimation device 63 has an arc-related map shown in FIG. 6, which indicates a relation between a current i and an increasing temperature Q(i). The arc-induced increasing temperature estimation device 63 estimates the increasing temperature with applying the detected current to the map. Here, the detected current is a current just after the electronic switch 3 is turned off or a current just before the current in the load turns to decrease from the increase thereof.

The present temperature estimation device 64 estimates a present temperature of the wire 7 by integrating following temperatures: the increasing temperatures estimated by the increasing temperature estimation unit 61 (the normal-mode and overcurrent mode increasing temperature estimation devices 61 a, 61 b); the decreasing temperatures estimated by the decreasing temperature estimation unit 62 (the normal-mode and overcurrent mode decreasing temperature estimation devices 62a, 62b); and the increasing temperatures estimated by the arc-induced increasing temperature estimation device 63. The estimated present temperature is stored in the memory 64a.

The temperature determination device 65 compares the present temperature Tnow estimated by the present temperature estimation device 64 with a predetermined allowable maximum temperature (a predetermined threshold temperature) Tth. If the temperature determination device 65 determines that Tnow is Tth or higher (Tnow ≥ Tth), the temperature determination device 65 outputs a circuit-shutoff signal to the switch control device 66.

The device 66 turns off the electronic switch 3, and shuts off the current to the load 4 thereby protecting the circuit, when the switch control device 66 receives the circuit-shutoff signal from the temperature determination device 65.

Meanwhile, the functional configuration of the control circuit 6 as described above is related only to a configuration applied for the layer short circuit or the chattering short circuit that occur in the load circuit 1, and a configuration of a shut-down circuit for a dead-short circuit is omitted.

Next, algorithms for estimation of the increasing temperatures by the increasing temperature estimation unit 61 and the arc-induced increasing temperature device 63, and algorithms for estimation of the decreasing temperatures by the decreasing temperature estimation unit 62, are explained as follows.

(A-1) Estimation of the increasing temperature by the normal-mode increasing temperature estimation device 61 a

When a normal current (i.e. a current lower than the predetermined value (e.g. 10A)) flows into the wire 7 and the current is increasing, a temperature of the wire 7 is shown in the formula (1) as follows;

$$T_1 = T_2 + i^2 r \cdot R1 \cdot \left(1 - \exp\left(-\frac{1}{C1 \cdot R1}t\right)\right) \quad \cdots (1),$$

wherein $T_1$ is the temperature of the wire [°C]; $T_2$ is an ambient temperature [°C]; i is a current [A]; r is an electric resistance of the wire [Ω]; R1 is a thermal resistance of the wire [°C/W]; C1 is a heat capacity of the wire [J/°C or W·sec/°C]; and t is transit time [sec].

In the formula (1), the ambient temperature $T_2$ is set to be 25°C in a normal environment, or set to be 85°C in a hot environment like that in an engine compartment, etc. The current i is a current value detected by the ammeter 5. The electric resistance r is an electric resistance of the wire 7, and set to be constant. The thermal resistance R1 represents the ability of the wire 7 to conduct heat, and is an intrinsic value based on properties of the wire 7 such as the material, thickness, shape and the like. The heat capacity C1 represents an amount of heat which is required to increase the temperature of the wire 7 by 1°C, and is an intrinsic value based on the properties of the wire 7. Therefore, if the current i and the transit time t are determined, the present temperature $T_1$ can be calculated according to the formula (1).

(A-2) Estimation of the increasing temperature by the overcurrent-mode increasing temperature estimation device 61 b

When an over-current (i.e. a current comparable to the predetermined value (e.g. 10A) or higher) flows into the wire 7 and the over-current is increasing, a temperature of the wire 7 is shown in the formula (2) as follows;

$$T_1 = T_2 + i^2 r \cdot R2 \cdot \left(1 - \exp\left(-\frac{1}{C2 \cdot R2}t\right)\right) \quad \cdots (2),$$

wherein $T_1$ is the temperature of the wire [°C]; $T_2$ is an ambient temperature [°C]; i is a current [A]; r is an electric resistance of a conductor [Ω]; R2 is a thermal resistance of the conductor [°C/W]; C2 is a heat capacity of the conductor [J/°C or W·sec/°C]; and t is transit time [sec].

In the formula (2), the ambient temperature $T_2$ is the same as defined in the formula (1). That is, it is set to be 25°C, 85°C or the like. The electric resistance r is set to be constant. The thermal resistance R2 represents the ability of the conductor including the wire 7 to conduct heat, and is a value defined by properties of the conductor, the value including the intrinsic value of the wire 7, as described above. The heat capacity C2 represents an amount of heat which is required to increase the temperature of the conductor by 1°C, and is a value based on the properties of the conductor, the value including the intrinsic value of the wire 7, as described above.

The above-described "conductor" is explained hereinafter.

When the over-current flows, it can be supposed that the chattering short circuit or layer short circuit may occur by intermittent or partial contact of the wire 7 to a body of a vehicle. In this case, a short-circuited pathway including the wire 7 through which the over-current flows, is defined as the "conductor". Accordingly, the thermal resistance R2 and thermal capacity C2 in the formula (2) are based on this conductor. Note that the thermal resistance R2 and thermal capacity C2 vary depending on a position in which the short circuit occurs, thus these are not exactly constant. However, it is found in the present invention that substantially precise estimation of the increasing temperature can be made even if the thermal resistance R2 and thermal capacity C2 is assumed to be constant based on an environment where the wire is located.

Therefore, in the embodiment of the present invention, the thermal resistance R2 and thermal capacity C2 are constant in the occurrence of the short circuit. Consequently, if the current i and the transit time t are determined, the present temperature $T_1$ can be calculated according to the formula (2).

(B-1) Estimation of the decreasing temperature by the normal-mode decreasing temperature estimation device 62a

When a current does not flow or a normal current (i.e. a current lower than the predetermined value) flows into the wire 7 and is decreasing, a temperature of the wire 7 by heat radiation is shown in the formula (3) as follows;

$$T_1 = T_2 + i^2 r \cdot R1 \cdot \exp\left(-\frac{1}{C1 \cdot R1} t\right) \quad \cdots (3),$$

wherein $T_1$ is the temperature of the wire [°C]; $T_2$ is an ambient temperature [°C]; r is an electric resistance of the wire [Ω]; R1 is a thermal resistance of a wire [°C/W]; C1 is a heat capacity of the wire [J/°C or W·sec/°C]; and t is transit time [sec].

In the formula (3), the ambient temperature $T_2$ is constant. The current "i" is a current value just before the current is shut off, or a current value saturating the heat generation in the wire 7 at the temperature when the current detected by the ammeter 5 starts to decrease (i.e. the temperature $T_1$ calculated by the formula (1)). Otherwise, if the temperature of the wire 7 is saturated (stable), the current "i" is a current value when the current is shut off, or a current value just before the current to be detected starts to decrease. The details on the current i is explained later. Accordingly, if the current i and the transit time t are determined, the present temperature $T_1$ can be calculated according to the formula (3).

(B-2) Estimation of the decreasing temperature by the overcurrent-more decreasing temperature estimation device 62b

When an over-current (i.e. a current having the predetermined value or higher) flows into the wire 7 and is decreasing, a temperature of the wire 7 is shown in the formula (4) as follows;

$$T_1 = T_2 + i^2 r \cdot R2 \cdot \exp\left(-\frac{1}{C2 \cdot R2} t\right) \quad \cdots (4),$$

wherein $T_1$ is the temperature of the wire [°C]; $T_2$ is an ambient temperature [°C]; r is an electric resistance of a conductor [Ω]; R2 is a thermal resistance of the conductor [°C/W]; C2 is a heat capacity of the conductor [J/°C or W·sec/°C]; and t is transit time [sec].

In the formula (4), the ambient temperature $T_2$ is constant. The current "i" is a current value saturating the heat generation in the wire 7 at the temperature when the current detected by the ammeter 5 decreases (i.e. the temperature $T_1$ calculated by the formula (2)). If the temperature of the wire 7 is saturated (stable), the current "i" is a current value just before the current to be detected decreases. The details on the current i is explained later. Accordingly, if the current i and the transit time t are determined, the present temperature $T_1$ can be calculated according to the formula (4).

(C-2) Estimation of the increasing temperature by the arc-induced increasing temperature estimation device 63

Just after the current is shut off or when the current turns to decrease from the increase thereof, the temperature of the wire 7 increase by a generation of an arcing. The arc-induced increasing temperature estimation device 63 preliminary memorizes the arc-related map shown in FIG. 6, which indicates the relation between a current i just before the current starts to decrease and the increasing temperature Q(i). Further, the arc-induced increasing temperature estimation device 63 estimates the increasing temperature Q(i) with reference to this arc-related map and estimates the temperature of the wire 7 according to the formula (5) as follows;

$$T_1 = T_{now} + Q(i) \quad \cdots (5),$$

wherein $T_{now}$ is the temperature $T_1$ of the wire 7 estimated in the previous sampling.

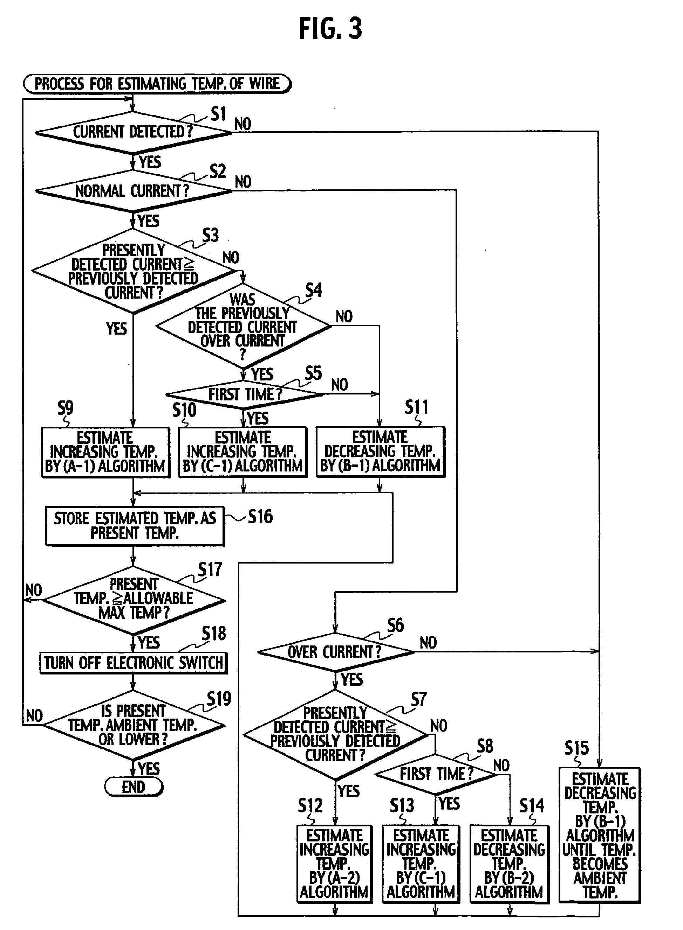

Next, an operation of the control circuit 6 is explained hereinafter with reference to a flowchart shown in FIG. 3. The process shown in the flowchart is executed repeatedly in a sampling rate (e.g. 5msec).

Firstly, it is determined whether or not a current is flowing into the load circuit 1 based on an output from the ammeter 5. Specifically, when the electronic switch 3 is turned on and the battery 2 is electrically connected to the load 4, it is determined whether or not the current is flowing into the wire 7 (Step S1).

If it is determined that the current is detected (YES in Step S1), it is determined whether the detected current is a normal current or an over-current caused by the short circuit (Step S2). In the embodiment, the threshold value between the normal current and the over-current is set to be 10A, for example. In this case, if a current detected by the ammeter 5 is lower than 10A, the current is determined to be the normal current. If a current is 10A or higher, the current is determined to be the over-current. Note that the threshold value is not limited to 10A.

If the current detected by the ammeter 5 is determined to be the normal current (YES in Step S2), the presently detected current is compared with a current detected in the previous sampling (Step S3).

If the presently detected current is determined to be equal to the previously detected current or higher (YES in Step S3), that is, if it is determined that the current flowing into the load 4 is increasing or the current is stable as a constant current, the normal-mode increasing temperature estimation device 61a starts a timer to measure the transit time and estimates the temperature $T_1$ of the wire 7 using the formula (1) shown in the algorithm (A-1) based on the current i detected by the ammeter 5 and transit time measured by the timer (Step S9). Note that the ambient temperature $T_2$ in the formula (1) is set to be, for example, 25°C as an initially preset temperature.

Next, the present temperature estimation device 64 stores the temperature $T_1$ estimated in Step S9 to the memory 64a as the present temperature $T_{now}$ of the wire 7 (Step S16). Thereafter, the process proceeds to Step S17.

Meanwhile, if the presently detected current is determined to be lower than the previously measured current (NO in Step S3), it is determined whether or not the previously detected current is the over-current (i.e. 10A or higher) (Step S4). As a result, if the previously detected current is determined to be the over-current (YES in Step S4), that is, if the over-current generated by the short circuit decreases to the normal current, it is determined whether or not the decrease of the current is firstly determined, in other words, it is determined whether or not it is a time just after the current starts to decrease (Step S5).

If the decrease of the current is determined to be the first decrease (YES in Step S5), it is further determined that the arcing occurred due to the decrease of the current. Accordingly, the increasing temperature Q(i) is estimated based on the arc-related map shown in FIG. 6. That is, the arc-induced increasing temperature estimation device 63 determines that the arc-induced heat is generated just after the current turns to decrease from the increase thereof in a state where the over-current is flowing into the load circuit 1. Thereafter, the device 63 estimates the temperature $T_1$ of the wire 7 according to the algorithm (C-1) (Step S10).

Next, in Step S16, the present temperature estimation device 64 adds the increasing temperature Q(i) estimated in Step S 10 to the temperature of the wire 7 stored in the memory 64a (i.e. the temperature $T_{now}$ of the wire 7 estimated in the previous sampling), and updates the temperature of the wire 7. That is, the increasing temperature Q(i) is added to the temperature $T_{now}$ of the wire 7, which is estimated in the previous sampling and is stored in the memory 64a, thereby the temperature $T_1$ of the wire 7 is estimated, thus stored in the memory 64a as a new present temperature $T_{now}$. Thereafter, the process proceeds to Step S 17.

Alternatively, "NO" is determined in Steps S4 or S5, that is, if the detected current in the previous sampling is not the over-current, or if the detected current in the previous sampling is the over-current but the decrease of the current is not firstly determined, the decreasing temperature is estimated by the formula (3) according to the algorithm (B-1).

In this step, the timer starts to measure the transit time after the timer is reset. The present temperature $T_1$ of the wire 7 is estimated by the formula (3) in which the transit time t, the current i, and the ambient temperature $T_2$ are substituted.

In this case, as described above, the current "i" in the formula (3) is a current saturating heat generation in the wire 7 at the temperature $T_1$ when the current is shut off or starts to decrease. Alternatively, when the temperature $T_1$ of the wire 7 is already saturated (stable), the current "i" is set to be a current just before the current is shut off or starts to decrease.

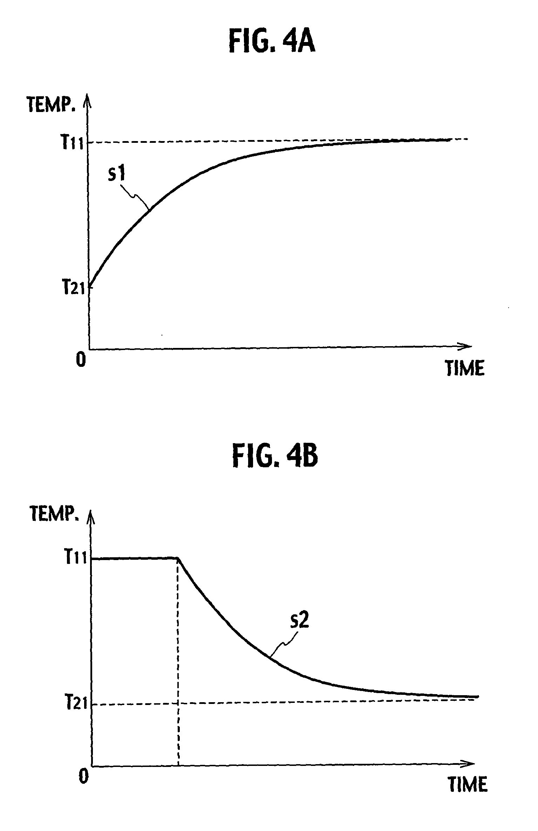

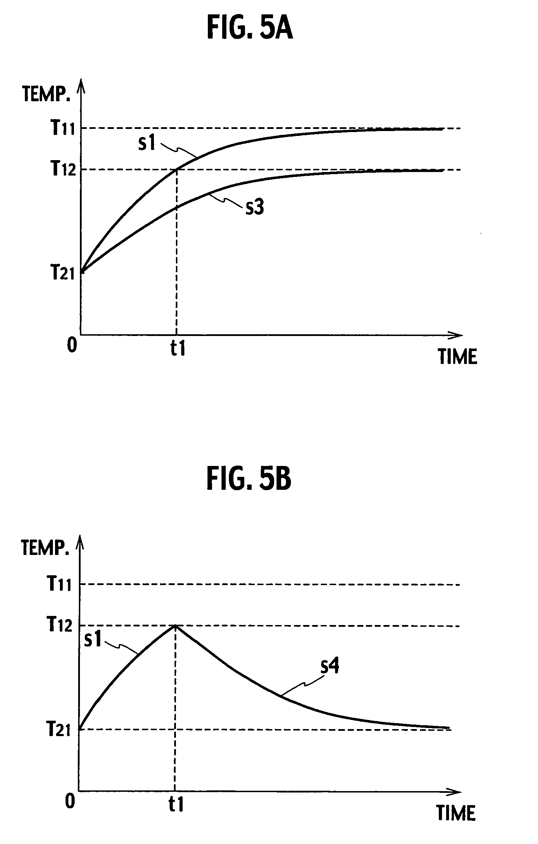

Hereinafter, the current "i" in the formula (3) is explained with reference to FIGs. 4 and 5. If the current $I_1$ is continuously increasing when the ambient temperature (i.e. an initial temperature of the wire 7) is a temperature $T_{21}$, the temperature of the wire 7 increases with the tendency shown in the formula (1), thereafter the temperature is saturated to a certain temperature $T_{11}$. This behavior represents a curve s1 as shown in FIG. 4A. Specifically, the temperature gradually increases with the transit time and converges with the temperature $T_{11}$. In other words, the temperature of the wire 7 is saturated to the temperature $T_{11}$.

Specifically, the temperature of the wire 7 converges with the temperature $T_{11}$ according to the below formula (6) which is deduced from formula (1) in which the transit time t is assumed to be infinity.

$$T_{11} = T_{21} + i^2 \cdot r \cdot R \quad \cdots (6).$$

If the current is shut off or the current starts to decrease when the temperature of the wire 7 is saturated to the temperature $T_{11}$, the current, which saturates the temperature of the wire 7 to the temperature $T_{11}$, is set to be the current "i" in the formula (3). In other words, the current $I_1$, when the current is shut off or just before the current starts to decrease, is set to be the current "i". Accordingly, as shown in the FIG. 4B, the temperature of the wire 7 decreases with a tendency as indicated by a curve s2, which is the vertically-flipped curve s1 of the FIG. 4A. Consequently, the temperature of the wire 7 converges with the temperature $T_{21}$ which is the ambient temperature.

If the current is shut off or starts to decrease when the temperature of the wire 7 is not saturated, that is, as shown in FIG. 5A, if the current is not detected at time (e.g. time t1) before the curve s1 converges with the temperature $T_{11}$, or if the current starts to decrease at the time, a current which saturates the temperature of the wire 7 to a temperature $T_{12}$ at the time t1, is set to be the current "i" in the formula (3). In other words, a current $I_2$ saturating the temperature of the wire 7 to the temperature T12 (c.f. a curve s3), is estimated, and the current $I_2$ is set to be the current "i" in the formula (3).

Accordingly, as shown in FIG. 5B, the temperature of the wire 7 decreases with a tendency as indicated by a curve s4, which is the vertically-flipped curve s3 of FIG. 5A.

When the decreasing temperature is estimated by the formula (2) in Step S11, the present temperature $T_{now}$ stored in the memory 64a in the present temperature estimation device 64 is updated in Step S7.

Next, it is explained a case where the current detected by the ammeter 5 is the over-current. If the current detected by the ammeter 5 is the predetermined threshold value (e.g. 10A) or higher (NO in Step S2), it is determined whether or not the detected current is the over-current (Step S6). If the current is the over-current (YES in Step S6), the presently detected current is compared with a detected current in the previous sampling (Step S7).

Further, if the presently detected current is determined to be equal to the previously detected current or higher (YES in Step S7), that is, if it is determined that the current flowing into the load 4 is increasing or is stable as a constant current, the overcurrent-mode increasing temperature estimation device 61b starts a timer to measure the transit time and estimates the temperature $T_1$ of the wire 7 using the formula (2) shown in the algorithm (A-2) based on the current i detected by the ammeter 5 and transit time measured by the timer (Step S12).

Thereafter, the estimated temperature $T_1$ of the wire 7 is stored in the memory 64a as a present temperature $T_{now}$ (Step S16), and the process proceeds to Step S 17.

Alternatively, if the current decreases, more specifically, if the over-current is already determined and the presently detected current is lower than the detected current in the previous sampling (NO in Step S7), it is determined whether or not the decrease of the current is firstly detected (Step S8).

If the decrease of the current is determined to be the first one (YES in Step S8), it is further determined that the arcing occurred due to the decrease of the current. Accordingly, the increasing temperature Q(i) is estimated based on the arc-related map shown in FIG. 6. That is, the arc-induced increasing temperature estimation device 63 determines that heat is generated by the arcing just after the current turns to decrease from the increase thereof in a state where the over-current is flowing into the load circuit 1. Thereafter, the device 63 estimates the increasing temperature Q(i) according to the algorithm (C-1) (Step S13).

Thereafter, the present temperature estimation device 64 adds the increasing temperature Q(i) estimated in Step S 13 to the temperature $T_{now}$ of the wire 7 stored in the memory 64a, and updates the temperature of the wire 7 (Step S16). Thereafter, the process proceeds to Step S 17.

Alternatively, "NO" is determined in Steps S8, that is, if the detected current in the previous sampling is the over-current but the decrease of the current is not firstly detected, the decreasing temperature is estimated by the formula (4) according to the algorithm (B-2) (Step S 14). In this case, setting manner of the current "i" to be substituted in the formula (4) is the same as the manner explained with showing FIGs. 4 and 5.

Thereafter, the estimated $T_1$ temperature of the wire 7 is stored in the memory 64a as the present temperature $T_{now}$, and the process proceeds to Step S 17.

Alternatively, if the current is not detected by the ammeter 5, that is, if the electronic switch 3 is off (NO in Step S1), the decreasing temperature of the wire 7 is estimated by the formula (3) shown in the algorithm (B-1) (Step S15).

Thereafter, the estimated temperature $T_1$ of the wire 7 is stored in the memory 64a as the present temperature $T_{now}$, and the process proceeds to Step S 17.

As described above, the present temperature $T_{now}$ of the wire 7 is stored in the memory 64a by a process of Step S15. Note that the present temperature $T_{now}$ is calculated with taking account of following factors: the increase of the temperature when a load current increases; the increase of the temperature due to the arcing; the heat radiation when the load current is shut off or decreases.

In Step S 17, the temperature determination device 65 compares the present temperature $T_{now}$ of the wire 7 stored in the memory 64a with an allowable maximum temperature (i.e. a predetermined threshold temperature) $T_{th}$, which is set to be a temperature at which a smoke emission does not occur (Step S17). If the present temperature $T_{now}$ is lower than the allowable maximum temperature $T_{th}$ ($T_{now} < T_{th}$; NO in Step S 17), the process returns to Step S1.

Alternatively, if the present temperature $T_{now}$ is equal to the allowable maximum temperature $T_{th}$ or higher ($T_{now} \geq T_{th}$) (YES in Step S 17), the temperature determination device 65 outputs a circuit-shutoff signal. And then, the switch control device 66 turns off the electronic switch 3, and stops supplying the current to the load 4 (Step S 18). That is, the device 66 turns off the electronic switch 3 before the temperature of the wire 7 becomes the allowable maximum temperature, thereby protects the load circuit 1 as a whole.

Thereafter, it is determined whether or not the present temperature $T_{now}$ of the wire 7 is equal to the ambient temperature (e.g. 25°C) or lower (Step S 19). If the present temperature $T_{now}$ is not the ambient temperature or lower (NO in Step S 19), the process from Steps S 1 to S 17 is repeated. The process is terminated when the present temperature $T_{now}$ becomes the ambient temperature or lower.

Consequently, the present temperature $T_{now}$ can be estimated based on the current detected by the ammeter 5, the increase or decrease of the current, and the occurrence of the arcing, thus can protect the load circuit appropriately.

In the protection device for the load circuit according to the embodiment of the present invention, the present temperature of the wire 7 can be estimated inclusively by following manners. When the current flowing into the load 4 is increasing, the temperature of the wire 7 is estimated by the formula (1). When the current flowing into the load 4 is the over-current and is increasing, the temperature thereof is estimated by the formula (2). When the current is zero or is decreasing within the normal current values, the temperature thereof is estimated by the formula (3). When the current is decreasing within the over-current values, the temperature thereof is estimated by the formula (4). Finally, when the arcing occurs, the increase of the temperature due to the arcing is added for estimation of the present temperature by the formula (5).

In addition, when the estimated present temperature $T_{now}$ of the wire 7 achieves the allowable maximum temperature $T_{th}$ at which a smoke emission may be induced, the electronic switch 3 is turned off, thereby protects the circuit. Specifically, it is determined whether or not the circuit is shut off based on the present temperature of the wire 7 estimated by the intrinsic properties of the wire 7 such that the thermal resistance R1, the thermal capacity C1 and the like, and by the properties of the conductor, which is forming the short circuit, such that the thermal resistance R2, the thermal capacity C2 and the like, when a short circuit occurs. Therefore, the circuit can be properly shut off before a smoke emits from the wire 7, thus the load circuit and the wire 7 are protected. Further, the protection device can avoid a forcible shutoff of the load circuit 1 irrespective of the very small heat generation under which the current can still be supplied continuously.

Further, in a case where the current flowing to the load 4 becomes zero or the current starts to decrease, the protection device precisely estimates the decreasing temperature due to the heat radiation from the wire by formulae (3), (4) which use a current saturating the temperature of the wire 7 to a temperature just before the above case. Accordingly, the decreasing temperature and the temperature of the wire 7 can be estimated precisely. Therefore, even if the chattering short or the layer short occurs, the circuit can be shut off properly before the smoke emits from the wire 7.

The protection device for the load circuit according to the present invention is explained by the embodiment as shown in the figures. However, the present invention is not limited by the figures and each configuration in the present invention may be replaced any one which has same function.

For example, the embodiment described above is used for the load circuit 1 for bulbs, motors and the like in vehicles, however, it may be used for other load circuits.

**Claims**

**1.** A protection device protecting a load circuit in which a power supply, a switch and a load are connected by a conductive wire, base on a detected current flowing into the load, comprising:

a current detecting device detecting a current flowing into the load;
a normal-mode increasing temperature estimation device estimating an increasing temperature of the wire by a first estimation based on the current detected by the current detecting device and thermal properties of the wire, when the current detecting device detects the current, the detected current is lower than a predetermined threshold value, and the current is increasing;
an overcurrent-mode increasing temperature estimation device estimating the increasing temperature of the wire by a second estimation based on the current detected by the current detecting device and thermal properties of a conductor connecting the power supply to the load, when the current detecting device detects the current, the detected current is equal to the predetermined threshold value or higher, and the current is increasing;
a normal-mode decreasing temperature estimation device estimating a decreasing temperature of the wire by a third estimation based on the current detected by the current detecting device and thermal properties of the wire, when the current detecting device detects no current, or when the current detecting device detects the current, the detected current is lower than the predetermined threshold value, and the current is decreasing;
an overcurrent-mode decreasing temperature estimation device estimating the decreasing temperature of the wire by a fourth estimation based on the current detected by the current detecting device and the thermal properties of the conductor connecting the power supply to the load, when the current detecting device detects the current, the detected current is equal to the predetermined threshold value or higher, and the current is decreasing;
an arc-induced increasing temperature estimation device estimating the increasing temperature of the wire due to an arcing with a preset arc-induced map, the arcing just after the current detecting device detects the current and thereafter the current is shut off or starts to decrease;
a present temperature estimation device estimating the temperature of the wire by accumulating the increasing and decreasing temperatures estimated by the normal-mode increasing temperature estimation device, overcurrent-mode increasing temperature estimation device, normal-mode decreasing temperature estimation device, overcurrent-mode decreasing temperature estimation device, and arc-induced increasing temperature estimation device;
a temperature determination device determining whether or not the temperature of the wire estimated by the present temperature estimation device exceeds a predetermined threshold temperature;
a control device shutting off the load circuit when the temperature determination device determines the temperature of the wire exceeds the predetermined threshold temperature.

2. The protection device according to claim 1, wherein
the thermal properties of the wire are thermal resistance R1, which represents an ability of the wire to conduct heat therein, and heat capacity C1, which represents an amount of heat required to increase the temperature of the wire by a unit temperature, when the current detected by the current detection device is lower than the predetermined threshold value; and
the thermal properties of the conductor are thermal resistance R2, which represents an ability of the wire connecting between the load and the power supply and a short-circuited pathway to conduct heat therein, and heat capacity C2 represents an amount of heat which is required to increase the temperature of the conductor by the unit temperature.

3. The protection device according to claim 2, wherein
the first estimation used in the normal-mode increasing temperature estimation device, is defined by

$$T_1 = T_2 + i^2 r \cdot R1 \cdot \left(1 - \exp\left(-\frac{1}{C1 \cdot R1}t\right)\right),$$

wherein $T_1$ is the temperature of the wire [°C]; $T_2$ is an ambient temperature [°C]; i is a current [A]; r is an electric resistance of the wire [Ω]; R1 is the thermal resistance of the wire [°C/W]; C1 is the heat capacity of the wire [J/°C or W·sec/°C]; and t is transit time [sec].

4. The protection device according to claim 2, wherein
the second estimation used in the overcurrent-mode increasing temperature estimation device, is defined by

$$T_1 = T_2 + i^2 r \cdot R2 \cdot \left(1 - \exp\left(-\frac{1}{C2 \cdot R2} t\right)\right),$$

wherein $T_1$ is the temperature of the wire [°C]; $T_2$ is an ambient temperature [°C]; i is a current [A]; r is an electric resistance of the conductor [Ω]; R2 is the thermal resistance of the conductor [°C/W]; C2 is the heat capacity of the conductor [J/°C or W·sec/°C]; and t is transit time [sec].

5. The protection device according to claim 2, wherein
the third estimation used in the normal-mode decreasing temperature estimation device, is defined by

$$T_1 = T_2 + i^2 r \cdot R1 \cdot \exp\left(-\frac{1}{C1 \cdot R1} t\right),$$

wherein $T_1$ is the temperature of the wire [°C]; $T_2$ is an ambient temperature [°C]; ]; i is a current [A] saturating the temperature of the wire to the temperature $T_1$ when the current is not detected or when the current decreases; r is an electric resistance of the wire [Ω]; R1 is the thermal resistance of the wire [°C/W]; C1 is the heat capacity of the wire [J/°C or W·sec/°C]; and t is transit time [sec].

6. The protection device according to claim 2, wherein
the forth estimation used in the overcurrent-mode decreasing temperature estimation device, is defined by

$$T_1 = T_2 + i^2 r \cdot R2 \cdot \exp\left(-\frac{1}{C2 \cdot R2} t\right),$$

wherein $T_1$ is the temperature of the wire [°C]; $T_2$ is an ambient temperature [°C]; i is a current [A] saturating the temperature of the wire to the temperature $T_1$ when the current is not detected or when the current decreases; r is an electric resistance of the conductor [Ω]; R2 is the thermal resistance of the conductor [°C/W]; C2 is the heat capacity of the conductor [J/°C or W·sec/°C]; and t is transit time [sec].

# FIG. 1

# FIG. 2

INCREASING TEMP. ESTIMATION UNIT — 61

NORMAL-MODE INCREASING TEMP. ESTIMATION DEVICE — 61a

OVER-CURRENT-MORE INCREASING TEMP. ESTIMATION DEVICE — 61b

AMMETER — 5

DECREASING TEMP. ESTIMATION UNIT — 62

NORMAL-MODE DECREASING TEMP. ESTIMATION DEVICE — 62a

OVER-CURRENT-MORE DECREASING TEMP. ESTIMATION DEVICE — 62b

ARC-INDUCED INCREASING TEMP. ESTIMATION DEVICE — 63

PRESENT TEMP. ESTIMATION DEVICE — 64

MEMORY — 64a

TEMP. DETERMINATION DEVICE — 65

SWITCH CONTROL DEVICE — 66

ELECTRONIC SWITCH — 3

6

EP 1 993 182 A2

# FIG. 3

# FIG. 4A

# FIG. 4B

# FIG. 5A

# FIG. 5B

# FIG. 6

## ARC-RELATED MAP

| CURRENT i | TEMPERATURE INCREMENT Q (i) |
|-----------|------------------------------|
| 0 ~ i1    | Q1                           |
| i1 ~ i2   | Q2                           |
| i2 ~ i3   | Q3                           |
| i3 ~ i4   | Q4                           |
| i4 ~ i5   | Q5                           |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002084654 A